# EUROPEAN PATENT SPECIFICATION

(11) **EP 3 072 673 B1**
(45) Date of publication and mention of the grant of the patent: **07.02.2018**
(21) Application number: 16161859.0
(22) Date of filing: 23.03.2016
(51) Int. Cl.: B29D 30/54, B29D 30/56

(54) **PRE-VULCANIZED TREAD STRIP ASSEMBLY USEFUL FOR THE COLD RETREADING OF A TYRE**
VORVULKANISIERTE REIFENLAUFFLÄCHENANORDNUNG GEEIGNET ZUR KALTRUNDERNEUERUNG VON REIFEN
ENSEMBLE D'UNE BANDE DE ROULEMENT PRÉVULCANISÉE APPROPRIÉE POUR LE RECHAPAGE À FROID D'UN PNEUMATIQUE

(30) Priority: 24.03.2015 IT RM20150122
(43) Date of publication of application: 28.09.2016
(73) Proprietor: Bridgestone Corporation, Tokyo 104-8340 (JP)
(72) Inventor: FIORENZA, Paolo, 00128 Roma (IT); FORTE, Gianluca, 00128 Roma (IT)
(74) Representative: Marchetti, Alessio

(56) References cited:
- WO-A1-2013/086407
- GB-A- 869 752
- GB-A- 1 503 027
- US-A1- 2005 180 704
- US-A1- 2014 202 619
- US-A1- 2014 261 973
- US-B1- 8 143 338

## Description

The present invention concerns a pre-vulcanized tread strip assembly useful for the cold retreading of a tyre. Generally, once the tread portion of a tyre is worn, the remaining part of the tyre is still able to guarantee the original operating conditions. Obviously, the discarding of tyres worn as above would result in both economic and environmental damage.
To avoid these drawbacks, it is now common practice to produce retread tyres, which are obtained by replacing the tread strip on a used carcass.
There are mainly two tyre retreading techniques: hot retreading and cold retreading, each characterised by a specific temperature range.

In cold retreading, a connecting layer of non-vulcanized rubber is positioned between the appropriately cleaned carcass and a new pre-vulcanized tread strip. This connecting layer has the purpose of ensuring adhesion of the used carcass to the new tread strip after vulcanization.
Generally, the pre-vulcanized tread strips are marketed in the form of an assembly composed of the same pre-vulcanized tread strip, an adhesive mixture layer already arranged on the inner surface of said pre-vulcanized tread strip and a polymer film arranged to protect the adhesive mixture.
So far the adhesive mixtures, commonly called cements, have been based on organic solvents. Said adhesive mixtures have a high adhesion efficiency and are very easy to use. These characteristics are due mainly to the high evaporation capacity of the organic solvent and to their capacity to fuse with another rubber (solubility of the rubber in the organic solvent) forming almost one single piece once the organic solvent has evaporated.

For environmental reasons, recent decisions at European level have drastically limited the use of organic solvents in the tyre industry, thus obliging the manufacturers to find alternative solutions in order to guarantee the necessary adhesion of the rubber layers.

Water-based adhesive mixtures have been considered as a solution for some time now.

Although water-based adhesive mixtures able to effectively guarantee adhesion of the different parts of the tyre to one another have been produced, their use in pre-vulcanized tread strip assembly is made complicated by a series of problems due to the presence of water in the adhesive mixture.

For a correct understanding of the problems arising from the use of water-based adhesive mixtures, it should be specified that, while the adhesive mixture must be almost completely dry before being applied to the carcass, when the protective plastic film is applied, said adhesive mixture must comprise a certain quantity of water. In fact, during retreading of the tyre the presence of water in the adhesive mixture constitutes an impediment to correct vulcanization, whereas during production of the assembly the presence of water in the adhesive mixture is able to ensure correct adhesion between the plastic film and the adhesive mixture. In this regard, it should be considered that in the assembly described above, the pre-vulcanized tread strips are far longer than those necessary for the retreading of one single tyre and, therefore, during retreading of the tyre the assembly has to be cut into parts of appropriate length. If the adhesion between the protective polymer film and the adhesive mixture is weak, the cutting operation will necessarily favour detachment of the plastic film for the assembly part still to be stored. In this way the adhesive mixture of this assembly part will no longer be appropriately protected and will therefore be subject to contamination which can prejudice its effectiveness in the subsequent tyre retreading operations.
It is common practice to subject the adhesive mixture applied on the pre-vulcanized tread strip to the action of an oven. Said solution, however, does not meet the need for different humidity during preparation of the assembly as explained above and, at the same time, necessarily entails a productivity disadvantage in terms of costs, time and energy consumption. Furthermore, the action of the oven could negatively affect the characteristics of the adhesive mixture.

Documents WO 2013/086407 - A and US 2014/0202619 - A disclose the use of water-based adhesives or cements in tire retreading.

Document GB 1503027 - A discloses the application of an adhesive layer to pre-cured tire tread using an unspecified "special rubber base bonding solution".

According to document GB 869752 - A, the rubber solution employed between the cushion rubber and the tyre is "diluted with a suitable solvent such as fat-free benzine, benzene or trichlorethylene".

A comparison between water-based and (organic solvent)-based adhesives used in tire manufacture and/or retreading, is given in document US 8143338 - B.

The use of protecting layers (e. g. tapes) containing super absorbent polymers (SAP), in order to provide protection and mechanical support together with a water blocking capability, is well known, for instance for power and/or optical cables: see for instance document US 2005/0180704 - A.

Document US 2014/0261973 - A discloses a pre-vulcanized tread strip assembly (12) useful for the cold re-treading of a tyre, comprising a pre-vulcanized tread strip (20), an adhesive compound layer (32) arranged on said pre-vulcanized tread strip, and a protective polymer film layer (34) arranged so as to cover the adhesive compound layer. That the adhesive compound can be water-based is disclosed therein. The need was therefore felt for a solution that allowed the use of water-based adhesive mixtures without the above-mentioned problems.
The subject of the present invention is a pre-vulcanized tread strip assembly useful for the cold retreading of a tyre as defined in claim 1 and comprising a pre-vulcanized tread strip, a layer of adhesive mixture arranged on said pre-vulcanized tread strip and a layer of protective polymer film arranged to cover the layer of adhesive mixture; said tread strip assembly being characterized in that said adhesive mixture is water-based and said protective polymer film consists of a polymer composition comprising at least one compound comprised in the class of superabsorbent polymers.

Preferred embodiments of the tread strip according to the invention are defined in the dependent claims.

Here and below, by the term "superabsorbent polymers" (known under the English acronym SAP) we mean material which in contact with water forms hydrogel, thus absorbing and retaining up to 300% by weight of water. This class of compounds will comprise substantially polymers able to bond the water molecules by means of hydrogen bond.
Preferably, said protective polymer film is polyethylene-based.
Preferably, said protective polymer film comprises said compound comprised in the class of superabsorbent polymers in a quantity ranging from 0.5 to 10% by weight. Preferably, the compound comprised in the class of superabsorbent polymers is a polyacrylate or a polyacrylamide.
Preferably, the polymer film is arranged to cover the layer of adhesive mixture when the latter comprises a water content ranging from 40 to 70% by weight.
Preferably, the polymer film comprises a small quantity of pigment to opacify it so as to optimise the protection of the mixture below from the UV rays.

Another subject of the present invention is a method for the production of a pre-vulcanized tread strip assembly useful for the cold retreading of a tyre as defined in claim 7, said method being characterized in that a layer of water-based adhesive mixture is arranged on a pre-vulcanized tread strip and said adhesive mixture is covered with a protective polymer film consisting of a polymer composition comprising at least one compound comprised in the class of superabsorbent polymers; said protective polymer film being arranged to cover said adhesive mixture when the latter has a water content ranging from 40 to 70% by weight.

Embodiment examples are given below for purely illustrative non-limiting purposes.

In particular, two pre-vulcanized tread strip assemblies were compared, differing only due to the type of protective film used. The first assembly (comparison) comprised a protective film made of polyethylene, while the second assembly (invention) comprised a protective film made of polyethylene comprising 3% by weight of sodium polyacrylate (Mw ∼ 5100, Sigma Aldrich SpA). In both the assemblies a water-based adhesive mixture was used having a water content of 70%.

After 2 days of storage of both the assemblies, it was found that the water-based adhesive mixture involved in the assembly of the present invention had a quantity of water of less than 10% by weight, while the water-based mixture involved in the comparison assembly had a quantity of water ranging from 35 to 40% by weight.

Furthermore, an adhesion test was performed comparing the assembly according to the present invention as described above, and an assembly produced with a solvent-based mixture, all other conditions being equal. After 1 day of storage of the two assemblies the adhesion force between the respective tread strips and the carcass was measured, in the same conditions. The adhesion force for the tread strip with the solvent-based adhesive mixture was 0.012 N/mm, while the adhesion force for the tread strip with the water-based adhesive mixture deriving from the assembly according to the present invention was 0.011 N/mm. This test showed that the assembly according to the present invention, although it comprises a water-based adhesive mixture, is able to provide a tread strip that can be effectively coupled to a carcass already used for the retreading of tyres.

To summarize, the present invention offers the great advantage of being able to produce tread strip assemblies for the retreading of tyres comprising a water-based adhesive mixture guaranteeing, without additional time and energy, both effective adhesion between the adhesive mixture and the protective polymer film during storage of the assembly, and effective adhesion between the tread strip and the carcass in the retread tyre.

The advantages described above are due to the fact that the present invention allows production of the assembly when the water-based mixture still contains the quantity of water necessary to ensure adhesion with the protective polymer film, ensuring that the tread strip, once removed from the assembly and ready for tyre retreading, has a dry adhesive mixture and, therefore, adapted to ensure correct adhesion between the latter and the used carcass.

## Claims

1. A pre-vulcanized tread strip assembly useful for the cold retreading of a tyre and comprising a pre-vulcanized tread strip, an adhesive mixture layer arranged on said pre-vulcanized tread strip and a protective polymer film layer arranged so as to cover the adhesive mixture layer; said tread strip assembly being **characterized in that** said adhesive mixture is water-based and said protective polymer film is made of a polymer composition comprising at least a compound which is comprised in the class of superabsorbent polymers.

2. A pre-vulcanized tread strip assembly according to claim 1, **characterized in that** said protective polymer film is polyethylene-based.

3. A pre-vulcanized tread strip assembly according to claim 1 or 2, **characterized in that** said protective polymer film comprises said compound comprised in the class of superabsorbent polymers in a quantity ranging from 0.5 to 10% by weight.

4. A pre-vulcanized tread strip assembly according to one of the previous claims, **characterized in that** said compound comprised in the class of superabsorbent polymers is a polyacrylate or a polyacrylamide.

5. A pre-vulcanized tread strip assembly according to one of the previous claims, **characterized in that** the polymer film is arranged so as to cover the adhesive mixture layer when the latter comprises a water content ranging from 40 to 70% by weight.

6. A pre-vulcanized tread strip assembly according to any of the previous claims, **characterized in that** the polymer film comprises a small quantity of opacifying pigment.

7. Method for preparing a pre-vulcanized tread strip assembly useful for the cold retreading of a tyre; said method being **characterized by** placing a water-based adhesive mixture on a pre-vulcanized tread strip and covering said adhesive mixture with a protective polymer film made of a polymer composition comprising at least a compound which is comprised in the class of superabsorbent polymers; said protective polymer film being arranged so as to cover said adhesive mixture when the latter comprises a water content ranging from 40 to 70% by weight.

## Patentansprüche

1. Vorvulkanisierte Laufflächenstreifenanordnung, die für die Kaltrunderneuerung eines Reifens von Nutzen ist und umfassend einen vorvulkanisierten Laufflächenstreifen, eine auf dem vorvulkanisierten Laufflächenstreifen angeordnete Haftmittelmischungsschicht und eine schützende Polymerfolienschicht, angeordnet um die Haftmittelmischungsschicht zu bedecken; wobei die Laufflächenstreifenanordnung **dadurch gekennzeichnet ist, dass** die Haftmittelmischung wasserbasiert ist und die schützende Polymerfolie aus einer Polymerzusammensetzung hergestellt ist, die mindestens eine Mischung umfasst, welche in der Klasse von superabsorbierenden Polymere umfasst ist.

2. Vorvulkanisierte Laufflächenstreifenanordnung nach Anspruch 1, **dadurch gekennzeichnet, dass** die schützende Polymerfolie polyethylenbasiert ist.

3. Vorvulkanisierte Laufflächenstreifenanordnung nach Anspruch 1 oder 2, **dadurch gekennzeichnet, dass** die schützende Polymerfolie die in der Klasse von superabsorbierenden Polymeren umfasste Mischung in einer Menge im Bereich von 0,5 bis 10 Gew.-% umfasst.

4. Vorvulkanisierte Laufflächenstreifenanordnung nach einem der vorstehenden Ansprüche, **dadurch gekennzeichnet, dass** die in der Klasse von superabsorbierenden Polymeren umfasste Mischung ein Polyacrylat oder ein Polyacrylamid ist.

5. Vorvulkanisierte Laufflächenstreifenanordnung nach einem der vorstehenden Ansprüche, **dadurch gekennzeichnet, dass** die Polymerfolie angeordnet ist, um die Haftmittelmischungsschicht zu bedecken, wenn die Letztere einen Wassergehalt im Bereich von 40 bis 70 Gew.-% umfasst.

6. Vorvulkanisierte Laufflächenstreifenanordnung nach einem der vorstehenden Ansprüche, **dadurch gekennzeichnet, dass** die Polymerfolie eine kleine Menge trübendes Pigment umfasst.

7. Verfahren zum Zubereiten einer vorvulkanisierten Laufflächenstreifenanordnung, die für die Kaltrunderneuerung eines Reifens von Nutzen ist; wobei das Verfahren **gekennzeichnet ist durch** Platzieren einer wasserbasierten Haftmittelmischung auf einen vorvulkanisierten Laufflächenstreifen und Bedecken der Haftmittelmischung mit einer schützenden Polymerfolienschicht, die hergestellt ist aus einer Polymerzusammensetzung, umfassend mindestens eine Mischung, welche in der Klasse von superabsorbierenden Polymeren umfasst ist; wobei die schützende Polymerfolie angeordnet ist, um die Haftmittelmischung zu bedecken, wenn die Letztere einen Wassergehalt im Bereich von 40 bis 70 Gew.-% umfasst.

## Revendications

1. Ensemble bande de rechapage pré-vulcanisée utile pour le rechapage à froid d'un pneumatique et comprenant une bande de rechapage pré-vulcanisée, une couche de mélange adhésif disposée sur ladite bande de rechapage pré-vulcanisée et une couche de film polymère protecteur disposée de façon à couvrir la couche de mélange adhésif ; ledit ensemble bande de rechapage étant **caractérisé en ce que** ledit mélange adhésif est à base d'eau et ledit film polymère protecteur est constitué d'une composition polymère comprenant au moins un composé qui est compris dans la classe des polymères superabsorbants.

2. Ensemble bande de rechapage pré-vulcanisée selon la revendication 1, **caractérisé en ce que** ledit film polymère protecteur est à base de polyéthylène.

3. Ensemble bande de rechapage pré-vulcanisée selon la revendication 1 ou 2, **caractérisé en ce que** ledit film polymère protecteur comprend ledit composé compris dans la classe des polymères superabsorbants en une quantité allant de 0,5 à 10 % en poids.

4. Ensemble bande de rechapage pré-vulcanisée selon l'une des revendications précédentes, **caractérisé en ce que** ledit composé compris dans la classe des polymères superabsorbants est un polyacrylate ou un polyacrylamide.

5. Ensemble bande de rechapage pré-vulcanisée selon l'une des revendications précédentes, **caractérisé en ce que** le film polymère est disposé de façon à couvrir la couche de mélange adhésif lorsque cette dernière comprend une teneur en eau allant de 40 à 70 % en poids.

6. Ensemble bande de rechapage pré-vulcanisée selon l'une quelconque des revendications précédentes, **caractérisé en ce que** le film polymère comprend une petite quantité de pigment opacifiant.

7. Procédé de préparation d'un ensemble bande de rechapage pré-vulcanisée utile pour le rechapage à froid d'un pneumatique ; ledit procédé étant **caractérisé par** la mise en place d'un mélange adhésif à base d'eau sur une bande de rechapage pré-vulcanisée et le recouvrement dudit mélange adhésif avec un film polymère protecteur constitué d'une composition polymère comprenant au moins un composé qui est compris dans la classe des polymères superabsorbants ; ledit film polymère protecteur étant disposé de façon à couvrir ledit mélange adhésif lorsque ce dernier comprend une teneur en eau allant de 40 à 70 % en poids.
